# EUROPÄISCHE PATENTANMELDUNG

(11) **EP 3 321 218 A1**
(43) Veröffentlichungstag der Anmeldung: **16.05.2018**
(21) Anmeldenummer: 16198442.2
(22) Anmeldetag: 11.11.2016
(51) Int. Cl.: B65G 23/14, B65G 23/36

(54) **BANDFÖRDERANLAGE ZUM FÖRDERN VON SCHÜTTGUT MIT EINEM ENDLOSEN FÖRDERBAND**

(71) Anmelder: Marti Technik AG, 3302 Moosseedorf (CH)
(72) Erfinder: Rufer, Peter, 3303 Jegenstorf (CH); Wüest, Simon, 3063 Ittigen (CH)
(74) Vertreter: BOVARD AG

(57) **Zusammenfassung**

Eine Bandförderanlage zum Fördern von Schüttgut mit einem endlosen Förderband (1), welches antreibbar ist und ein Obertrum (2) und ein Untertrum aufweist, ist mit einem Hilfsantrieb (4) ausrüstbar. Dieser Hilfsantrieb (4) umfasst ein Antriebsband (8), das ein Obertrum (12) und ein Untertrum (13) aufweist, und kann zwischen Obertrum (2) und Untertrum (3) des Förderbandes (1) eingesetzt werden, so dass die Unterseite des Obertrums (2) des Förderbandes (1) auf der Oberseite des Obertrums (12) des Antriebsbandes (8) zur Anlage kommt. Unterhalb des Obertrums (12) des Antriebsbandes (8) ist eine Kammer (14) angeordnet, deren offene Oberseite durch das Obertrum (12) des Antriebsbandes (8) abgedeckt ist. Diese Kammer (14) ist über eine Absaugeinrichtung (15) evakuierbar, das Antriebsband (8) ist mindestens teilweise luftdurchlässig ausgebildet, der am Antriebsband (8) anliegende Bereich des Förderbandes (1) wird an das Antriebsband (8) angesaugt, der Reibschluss zwischen Antriebsband (8) und Förderband (1) wird verbessert, die Antriebsleistung ist somit besser übertragbar.

## Beschreibung

Die vorliegende Erfindung bezieht sich auf eine Bandförderanlage zum Fördern von Schüttgut mit einem endlosen Förderband, welches antreibbar ist und ein Obertrum und ein Untertrum aufweist, welche Bandförderanlage mit einem Hilfsantrieb ausrüstbar ist, umfassend ein um Umlenkrollen gelegtes Antriebsband, das ein Obertrum und ein Untertrum aufweist, welcher Hilfsantrieb zwischen Obertrum und Untertrum des Förderbandes einsetzbar ist, so dass die Unterseite des Obertrums des Förderbandes auf der Oberseite des Obertrums des Antriebsbandes zur Anlage kommt.

Derartige Bandförderanlagen zum Fördern von Schüttgut werden in vielfältiger Weise eingesetzt. Beispielsweise im Tunnelbau sind diese Bandförderanlagen zum Fördern des Schüttgutes mit jeweils einer Antriebstation ausgestattet. Entlang der Förderstrecke wird das Förderband mittels Führungen und Stützrollen in der gewünschten Position gehalten. Die Bandförderanlage ist mit einem Bandspeicher ausgestattet, dadurch kann die Förderstrecke in bekannter Weise verlängert werden. Wenn der Bandspeicher vollständig aufgebraucht ist, kann das Förderband verlängert werden, indem ein Verlängerungsstück eingesetzt wird. Durch diese Möglichkeiten kann das Förderband der Bandförderanlage eine grosse Länge aufweisen, die von der Antriebsstation auf das Förderband abgehbare Antriebsleistung kann dadurch zu klein werden, die Förderlänge des Förderbandes ist dadurch begrenzt, das Schüttgut muss beispielsweise von einer ersten Bandförderanlage auf eine daran anschliessende weitere Bandförderanlage umgeladen werden, was aufwändig ist.

In die grosse Länge aufweisenden Bandförderanlagen können Hilfsantriebe eingesetzt werden. Ein derartiger Hilfsantrieb ist beispielsweise aus der Veröffentlichungsschrift DE 26 10 917 A1 bekannt. Dieser Hilfsantrieb umfasst ein um Umlenkrollen gelegtes Antriebsband mit einem Obertrum und einem Untertrum, der in die Bandförderanlage eingesetzt werden kann, so dass die Unterseite des Obertrums des Förderbandes auf der Oberseite des Obertrums des Antriebsbandes zur Anlage kommt. Das Antriebsband wird mit einem zusätzlichen Hilfsantrieb angetrieben, zwischen dem Förderband und dem Antriebsband entsteht eine reibschlüssige Verbindung, die durch das Gewicht des auf dem Förderband geförderten Schüttgutes verbessert wird. Dadurch kann in platzsparender Weise die eine grosse Länge aufweisende Bandförderanlage mit einem zusätzlichen Antrieb versehen werden, die Effizienz der Bandförderanlage wird verbessert.

Da die Antriebsleistung des Hilfsantriebs über Reibschluss vom Antriebsband auf das Förderband übertragen wird, ist es erforderlich, die Länge des Hilfsantriebs möglichst gross zu wählen.

Die grosse Länge der Hilfsantriebs hat zur Folge, dass die Herstellung dieses Hilfsantriebs aufwändig wird, das Einsetzen dieses Hilfsantriebs in die Bandförderanlage wird dadurch kompliziert und ebenfalls aufwändig.

Die Aufgabe der vorliegenden Erfindung besteht nun darin, eine Bandförderanlage mit einem Hilfsantrieb auszustatten, bei welchem die Antriebsleistung des Hilfsantriebs in optimaler Weise auf das Förderband der Bandförderanlage übertragen werden kann, wobei die Dimensionen des Hilfsantriebs klein gehalten werden sollen.

Erfindungsgemäss erfolgt die Lösung der Aufgabe dadurch, dass unterhalb des Obertrums des Antriebsbandes eine Kammer angeordnet ist, deren im Wesentlichen offene Oberseite durch das Obertrum des Antriebsbandes abgedeckt ist, dass die Randbereiche der Oberseite mit Dichtmitteln ausgestattet sind, welche mit dem Antriebsband zusammenwirken, dass die Kammer mit einer Absaugeinrichtung verbunden ist und das Antriebsband mindestens teilweise luftdurchlässig ausgebildet ist.

Mit dieser Ausgestaltung wird erreicht, dass das Förderband beim Überfahren der Kammer durch den in der Kammer erzeugten Unterdruck wegen der Luftdurchlässigkeit des Antriebsbandes gegen das Antriebsband angesaugt wird, wodurch der Reibschluss zwischen dem Antriebsband und dem Förderband massiv verbessert wird. Dadurch kann der Hilfsantrieb insbesondere hinsichtlich der Länge bezüglich der bekannten Hilfsantriebe wesentlich kleiner dimensioniert werden, was die Herstellung und die Handhabung des Hilfsantriebs wesentlich vereinfacht.

In vorteilhafter Weise wird die Luftdurchlässigkeit des Antriebsbandes dadurch erreicht, dass dieses mit durchgehenden Öffnungen ausgestattet ist, wodurch die Stabilität des Antriebsbandes gewährleistet bleibt.

In vorteilhafter Weise sind die durchgehenden Öffnungen durch das Antriebsband Bohrungen, die in Ausnehmungen münden, die in die gegen das Förderband gerichtete Oberfläche des Antriebsbandes eingelassen sind. Mit diesen in die Oberfläche des Antriebsbandes eingelassenen Ausnehmungen wird erreicht, dass die wirksame Ansaugfläche zwischen dem Antriebsband und dem Förderband wesentlich vergrössert wird, trotzdem ist die Stabilität des Antriebsbandes gewährleistet.

In vorteilhafter Weise ist mindestens eine der Umlenkrollen des Antriebsbandes mit einer regelbaren Antriebseinrichtung versehen, die Laufgeschwindigkeit des Antriebsbandes kann dadurch an die Laufgeschwindigkeit des Förderbandes angepasst werden.

In vorteilhafter Weise ist das Obertrum des Antriebsbandes durch Tragrollen abgestützt, wodurch das Gewicht des Förderbandes und dem damit beförderten Schüttgut durch die Tragrollen des Antriebsbandes aufgenommen werden können.

Im Bereich der Kammer sind die Tragrollen innerhalb der Kammer angebracht, wodurch die Kammer in einfacher Weise aufgebaut und dicht gehalten werden kann.

Eine weitere vorteilhafte Ausgestaltung der Erfindung besteht darin, dass die Dichtmittel Dichtleisten umfassen, die auf Tragelementen lösbar aufgesetzt sind. Das Antriebsband gleitet in Betrieb über die Oberflächen dieser Dichtleisten, es kann nicht vermieden werden, dass diese Dichtleisten abgenützt werden, diese können dann in einfacher Weise durch neue Dichtleisten ersetzt werden.

In vorteilhafter Weise sind die Tragelemente mit den aufgesetzten Dichtleisten mit Anpressmitteln ausgestattet, mittels welchen die Dichtleisten an das Antriebsband anpressbar sind. Durch diese Möglichkeit kann der Anpressdruck an die Betriebsbedingungen angepasst werden, so dass eine optimale Dichtheit bei geringst möglicher Abnützung der Dichtleisten erreicht werden kann.

In vorteilhafter Weise sind die Anpressmittel aus Tragleisten gebildet, welche als Stössel wirken, welche über Stellmittel verstellbar sind. Dadurch wird einerseits ein einfacher Aufbau dieser Antriebsmittel ermöglicht, gleichzeitig wird durch diese Stössel der Spalt zwischen Dichtleisten und Tragelementen dichtend abgeschlossen.

In vorteilhafter Weise sind die Stellmittel über ein fluides Mittel verstellbar, was eine einfache Bedienbarkeit ermöglicht.

In vorteilhafter Weise sind die Dichtleisten aus einem abriebfesten, einen geringen Gleitreibungskoeffizienten aufweisenden Material gebildet, wodurch die Abnützung möglichst gering gehalten werden kann.

In vorteilhafter Weise ist die Absauganlage mit einer regelbaren Absaugpumpe ausgestattet, wodurch der Ansaugdruck zwischen Förderband und Antriebsband in optimaler Weise auf die Betriebsbedingungen angepasst werden kann.

Eine Ausführungsform der Erfindung wird nachfolgend anhand der beiliegenden Zeichnungen beispielhaft näher erläutert.

Es zeigt
Figur 1 in räumlicher Darstellung einem Bereich eines Förderbandes einer Bandförderanlage, in welchem Bereich der erfindungsgemässe Hilfsantrieb eingesetzt ist;
Figur 2 eine Seitenansicht auf den Bereich des Förderbandes mit eingesetztem Hilfsantrieb gemäss Figur 1;
Figur 3 eine Draufsicht auf den Bereich des Förderbandes mit eingesetztem Hilfsantrieb gemäss Figur 1;
Figur 4 eine Schnittdarstellung des Förderbandes mit dem Hilfsantrieb entlang Linie IV-IV gemäss Figur 2;
Figur 5 eine Schnittdarstellung des Förderbandes mit eingesetztem Hilfsantrieb entlang Linie V-V gemäss Figur 3;
Figur 6 in vergrösserter Darstellung den Bereich der Dichtmittel mit den Anpressmitteln gemäss Figur 5;
Figur 7 in räumlicher Darstellung eine Ausführungsmöglichkeit zur Ausgestaltung der Oberfläche des Antriebsbandes; und
Figur 8 im Detail die Ansicht der Ausgestaltung der Oberfläche des Antriebsbandes gemäss Figur 7.

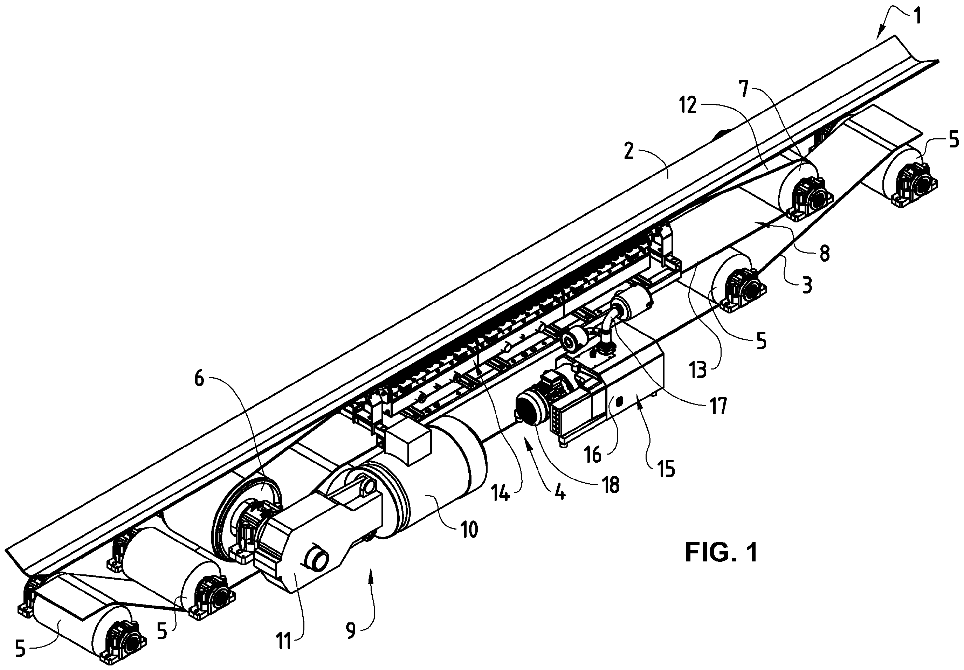

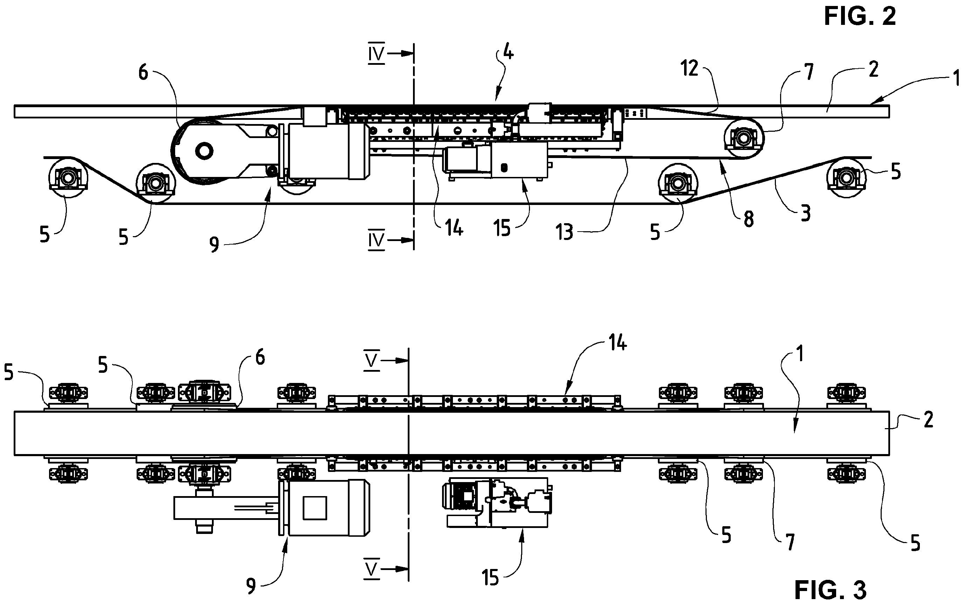

Aus den Figuren 1 bis 3 ist ein Bereich eines Förderbandes 1 ersichtlich, der zu einer bekannten, nicht vollständig dargestellten Bandförderanlage zum Fördern von Schüttgut gehört. Im bekannter, nicht dargestellter Weise wird das Förderband 1 von einer ladeseitigen Umlenkstation zu einer entladeseitigen Umlenkstation geführt, wobei eine oder beide Umlenkstationen mit Antrieben ausgestattet sind. Das Förderband 1 umfasst ein Obertrum 2 und ein Untertrum 3. Auf dem Obertrum 2 wird das Schüttgut befördert, die Randbereiche des das Obertrum 2 bildenden Förderbandes 1 sind deshalb angehoben, so dass eine V-Form entsteht, was in bekannter Weise durch entsprechend ausgerichtete Trag- und Führungsrollen erreicht wird.

Derartige Förderanlagen können, wenn sie beispielsweise im Tunnelbau eingesetzt werden, eine sehr grosse Länge aufweisen, so dass Hilfsantriebe 4 eingesetzt werden müssen. In den Figuren 1 bis 3 ist jeweils ein derartiger Hilfsantrieb 4 dargestellt, mit welchem eine Bandförderanlage ausrüstbar ist. Dieser Hilfsantrieb 4, der, wie später noch beschrieben wird, auf einem Rahmengestell aufgesetzt wird, wird zwischen dem Obertrum 2 und dem Untertrum 3 des Förderbandes 1 angeordnet. Um mehr Platz zu schaffen, wird das Förderband 1 im Bereich des Hilfsantriebs 4 um Leitrollen 5 um den Hilfsantrieb 4 herumgeführt.

Der Hilfsantrieb 4 umfasst eine erste Umlenkrolle 6 und eine zweite Umlenkrolle 7, um welche das endlose Antriebsband 8 gelegt ist. Im hier dargestellten Ausführungsbeispiel ist die erste Umlenkrolle 6 mit einem Antrieb 9 ausgestattet, bestehend aus einem Antriebsmotor 10 und einem Getriebe 11. Der Antriebsmotor 10 kann ein Elektromotor sein, der in bekannter Weise regelbar ist, so dass die Laufgeschwindigkeit des Antriebsbandes 8 eingestellt werden kann. Das Antriebsband 8 weist wiederum ein Obertrum 12 und ein Untertrum 13 auf, der Hilfsantrieb 4 ist so zwischen das Obertrum 2 und das Untertrum 3 des Förderbandes 1 eingesetzt, dass die Oberseite des Obertrums 12 des Antriebsbandes mit der Unterseite des Obertrums 2 des Förderbandes 1 zur Anlage kommt.

Unterhalb des Obertrums 12 des Antriebsbandes 8 ist eine Kammer 14 angeordnet. Wie später noch im Detail beschrieben wird, wird die offene Oberseite dieser Kammer 14 durch das Obertrum 12 des Antriebsbandes 8 abgedeckt, die Randbereiche der Oberseite sind mit Dichtmitteln ausgestattet, die am Antriebsband 8 zur Anlage kommen, die Kammer 14 ist mit einer Absaugeinrichtung 15 ausgestattet, mittels welcher in der Kammer 14 ein Unterdruck erzeugt werden kann. Da das Antriebsband 8 mindestens teilweise luftdurchlässig ausgebildet ist, wird das Obertrum 2 des Förderbandes 1 an das Antriebsband 8 angesaugt. Die Absaugeinrichtung 15 besteht aus einer Vakuumpumpe 16, die über eine Leitung 17 an die Kammer 14 angeschlossen ist, die Vakuumpumpe 16 wird ebenfalls durch einen Antriebsmotor 18 angetrieben, der ebenfalls beispielsweise ein Elektromotor sein kann. Diese Absaugeinrichtung 15 ist in bekannter Weise regelbar, so dass der Druck innerhalb der Kammer 14 an die Bedürfnisse angepasst werden kann.

Im Betrieb der Bandförderanlage fördert das Förderband 1 das daraufliegende Schüttgut, im Bereich der Kammer 14 wird das Obertrum 2 des Förderbandes 1 gegen das Obertrum 12 des Antriebsband 8 gesaugt, das Antriebsband 8 weist im Wesentlichen die gleiche Laufgeschwindigkeit auf, wie das Förderband 1, durch den Unterdruck in der Kammer 14 wird das Förderband 1 gegen das Antriebsband 8 angesaugt, zwischen Förderband 1 und Antriebsband 8 entsteht dadurch ein relativ grosser Anpressdruck, die Reibung zwischen Förderband 1 und Antriebsband 8 wird dadurch gross, wodurch die Effizienz des Hilfsantriebs 4 gesteigert wird.

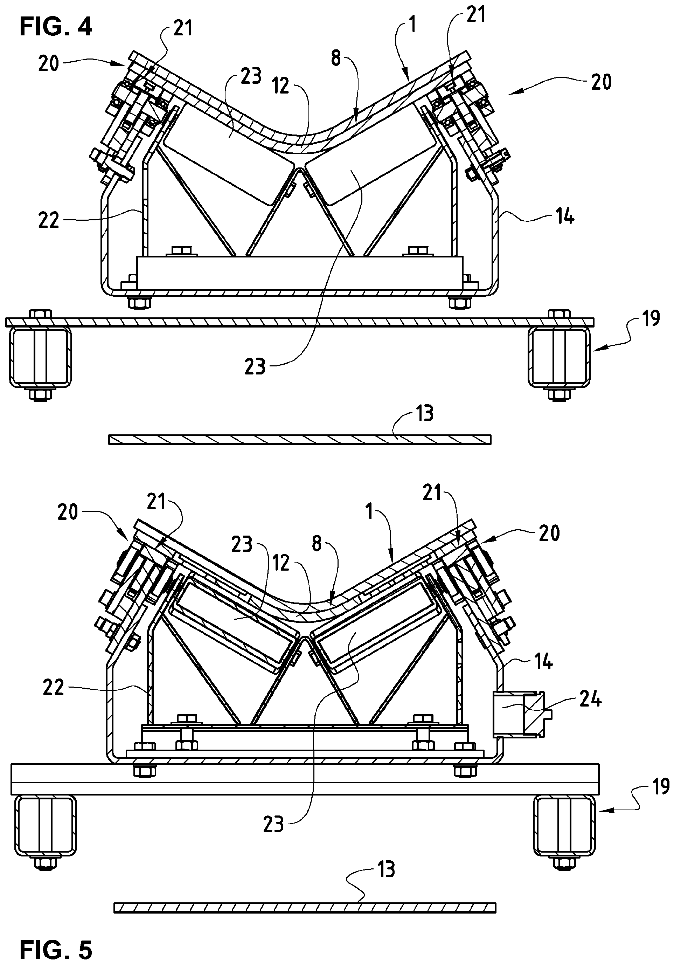

Wie aus den Figuren 4 und 5 ersichtlich ist, ist die Kammer 14 des Hilfsantriebs auf einem Tragrahmen 19 befestigt, auf welchem alle Elemente des Hilfsantriebs angeordnet sind. Dieser Tragrahmen 19 ist in bekannter, nicht dargestellter Weise in das Gestell der Bandförderanlage eingesetzt und fixiert. Die Oberseite der Kammer 14 ist offen, diese wird durch das Obertrum 12 des Antriebsbandes 8 abgedeckt. Die Randbereiche 20 der Oberseite der Kammer 14 sind mit Dichtmitteln 21 ausgestattet. Diese Dichtmittel 21, die später noch im Detail beschrieben werden, dichten die Kammer 14 zum Antriebsband 8 ab. Innerhalb der Kammer 14 sind auf entsprechend angeordneten Tragelementen 22 Tragrollen 23 drehbar gelagert. Auf diesen Tragrollen 23, die in bekannter Weise V-förmig ausgerichtet sind, wird das Antriebsband 8 abgestützt. Auf dem Antriebsband 8 liegt das Förderband 1 auf.

In Figur 5 ist der Anschlussstutzen 24 dargestellt, an welchem die Leitung 17 (Figur 1) der Absaugeinrichtung 15 angeschlossen ist, über welchen die Kammer 14 evakuiert wird.

Die Randbereiche der Vorderseite und der Hinterseite der Kammer 14, die mit dem Antriebsband 8 in Kontakt kommen, sind mit entsprechenden Dichtmitteln abgedichtet, diese Dichtmittel sind in bekannter Weise am die V-förmige Ausbildung des Antriebsbandes 8 angepasst.

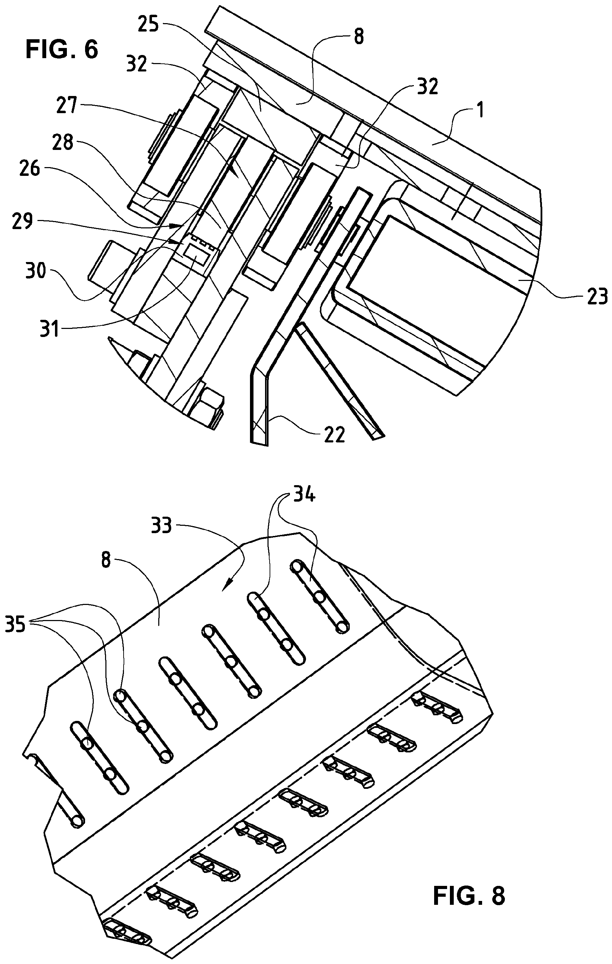

Aus Figur 6 ist ein seitlicher Randbereich 20 der Kammer 14 ersichtlich. Wie bereits erwähnt ist der jeweilige Randbereich 20 mit Dichtmitteln 21 ausgestattet, die eine Dichtleiste 25 umfassen, die auf Tragelementen 26 lösbar befestigt sind. Diese Dichtleisten 25 sind mit dem Antriebsband 8, auf welchem das Förderband 1 aufliegt, in Kontakt. Die Dichtleisten 25 sind auf Tragleisten 27 angebracht, welche Tragleisten 27 als Stössel 28 ausgebildet sind. Diese Stössel 28 sind in den Tragelementen 26 verschiebbar gelagert, so dass sie zusammen mit der jeweiligen Dichtleiste 25 gegen das Antriebsband 8 hin und von diesem weg verschiebbar sind. Im Bereich der Unterseite der Stössel 28 sind Anpressmittel 29 angebracht, mittels welchen die Stössel 28 und somit die Dichtleiste 25 gegen das Antriebsband 8 bewegbar sind. Im hier dargestellten Ausführungsbeispiel bestehen diese Anpressmittel 28 aus einem schlauchförmigen Element 30, das einen inneren Hohlraum 31 aufweist, in welchen ein fluides Mittel in bekannter Weise einpressbar ist, wodurch das schlauchförmige Element 30 in Querschnitt vergrössert bzw. verkleinert werden kann und dadurch über die Stössel 28 die Dichtleiste 25 mehr oder weniger stark am das Antriebsband 8 angepresst werden kann. Wenn als fluides Mittel beispielsweise Pressluft eingesetzt wird, erfolgt die Anpressung der Dichtleiste 25 über die Stössel 28 federnd. Somit kann der Kontakt bzw. der Anpressdruck zwischen Dichtleisten 25 und Antriebsband 8 in optimaler Weise eingestellt werden, so dass der Verschleiss der Dichtleisten 25 möglichst gering gehalten werden.

Beidseits der Dichtleisten 25 sind an den Tragelementen 26 paarweise Abstützrollen 32 angebracht, welche drehbar gelagert sind. Diese Abstützrollen 32 dienen dazu, dass das Antriebsband 8 im Bereich der Dichtleisten 25 optimal ausgerichtet und positioniert ist, so dass die Auflage dieses Bereichs des Antriebsbandes 8 auf den Dichtleisten 25 möglichst gleichmässig gehalten werden kann.

Zwischen den Dichtleisten 25 und dem Antriebsband 8 entsteht im Betrieb der Bandförderanlage Reibung, insbesondere die Dichtleisten 25 sind dadurch einem Verschleiss unterworfen. Um diesen Verschleiss möglichst gering zu halten, ist es vorteilhaft, die Dichtleisten aus einem Material zu bilden, das abriebfest ist und einen geringen Gleitreibungskoeffizienten aufweist. Derartige Materialien sind bekannt, sie können beispielsweise aus einem Material auf Teflonbasis gebildet sein. Die Dichtleisten 25 sind lösbar auf die Tragleisten 27 aufgesetzt, die Verbindung zwischen Dichtleisten 25 und Tragleisten 27 kann beispielsweise durch eine Verschraubung erfolgen.

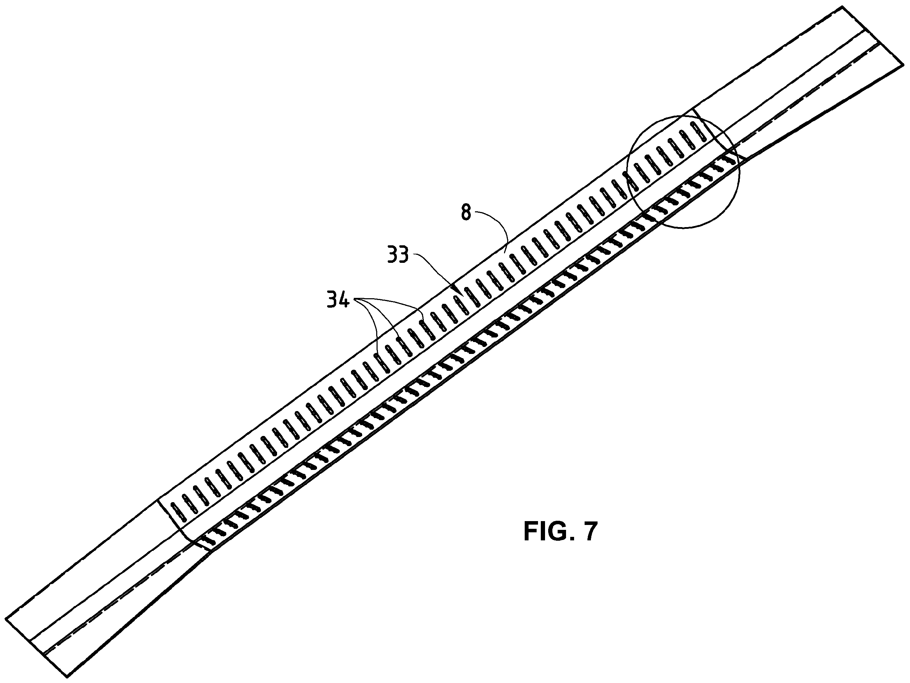

Figur 7 zeigt die Oberfläche 33 des Antriebsbandes 8. Um die Ansaugung des Förderbandes 1 an dieses Antriebsband 8 möglichst optimal zu gestalten, sind in die die Oberfläche 33 des Antriebsbandes 8 bildende Deckschicht schlitzförmige Ausnehmungen 34 eingearbeitet. Üblicherweise besteht die Deckschicht eines derartigen Antriebsbandes 8 aus einem gummiartigen Material, die schlitzförmigen Ausnehmungen 34 können somit in einfacher Weise in diese gummiartige Deckschicht eingearbeitet werden, beispielsweise durch einen Fräsvorgang, ohne dass die Zug- und Tragstruktur dieses Antriebsbandes 8 verletzt wird und dadurch die Festigkeit des Antriebsbandes 8 gewährleistet ist.

In der vergrösserten Darstellung des Antriebsbandes 8 sind die in die die Oberfläche 33 bildende Deckschicht eingebrachten schlitzförmigen Ausnehmungen 34 ersichtlich, die sich quer zur Bandrichtung über einen Teilbereich der Breite des Antriebsbandes 8 erstrecken. Diese schlitzförmigen Ausnehmungen 34 müssen lediglich eine Tiefe von einigen wenigen Millimetern aufweisen. In den schlitzförmigen Ausnehmungen 34 sind durchgehende Öffnungen 35 angebracht, die das Antriebsband 8 vollständig durchdringen. Diese durchgehenden Öffnungen 35 können beispielsweise Bohrungen sein, sie können aber beispielsweise auch durch Ausstanzungen erhalten werden. Selbstverständlich können die schlitzförmigen Ausnehmungen 34, die in die Oberfläche 33 des Antriebsbandes 8 eingearbeitet sind, eine andere Form oder Ausrichtung oder geometrische Abmessung aufweisen, als sie im hier dargelegten Ausführungsbeispiel dargestellt sind.

Dieser erfindungsgemässe Hilfsantrieb für eine Bandförderanlage kann durch die über die Ansaugung verbesserte Reibverbindung zwischen Antriebsband und Förderband klein dimensioniert werden, was ermöglicht, dass ein derartiger Hilfsantrieb an praktisch jeder beliebigen Stelle in die Bandförderanlage eingesetzt werden kann, wobei die Antriebsleistungsübertragung optimal ist und die Handhabung sehr einfach ist.

## Patentansprüche

1. Bandförderanlage zum Fördern von Schüttgut mit einem endlosen Förderband (1), welches antreibbar ist und ein Obertrum (2) und ein Untertrum (3) aufweist, welche Bandförderanlage mit einem Hilfsantrieb (4) ausrüstbar ist, umfassend ein um Umlenkrollen (6, 7) gelegtes Antriebsband (8), das ein Obertrum (12) und ein Untertrum (13) aufweist, welcher Hilfsantrieb (4) zwischen Obertrum (2) und Untertrum (3) des Förderbandes (1) einsetzbar ist, so dass die Unterseite des Obertrums (2) des Förderbandes (1) auf der Oberseite des Obertrums (12) des Antriebsbandes (8) zur Anlage kommt, **dadurch gekennzeichnet, dass** unterhalb des Obertrums (12) des Antriebsbandes (8) eine Kammer (14) angeordnet ist, deren im Wesentlichen offene Oberseite durch das Obertrum (12) des Antriebsbandes (8) abgedeckt ist, dass die Randbereiche (20) der Oberseite mit Dichtmitteln (21) ausgestattet sind, welche mit dem Antriebsband (8) zusammenwirken, dass die Kammer (14) mit einer Absaugeinrichtung (15) verbunden ist und das Antriebsband (8) mindestens teilweise luftdurchlässig ausgebildet ist.

2. Bandförderanlage nach Anspruch 1, **dadurch gekennzeichnet, dass** das Antriebsband (8) mit durchgehenden Öffnungen (35) versehen ist.

3. Bandförderanlage nach Anspruch 2, **dadurch gekennzeichnet, dass** die durchgehenden Öffnungen (35) Bohrungen sind, die in Ausnehmungen (34) münden, die in die gegen das Förderband (1) gerichtete Oberfläche des Antriebsbandes (8) eingelassen sind.

4. Bandförderanlage nach einem der Ansprüch 1 bis 3, **dadurch gekennzeichnet, dass** mindestens eine der Umlenkrollen (6, 7) des Antriebsbandes (8) mit einer regelbaren Antriebseinrichtung (9) versehen ist.

5. Bandförderanlage nach einem der Ansprüche 1 bis 4, **dadurch gekennzeichnet, dass** das Obertrum (12) des Antriebsbandes (8) durch Tragrollen (23) abgestützt ist.

6. Bandförderanlage nach Anspruch 5, **dadurch gekennzeichnet, dass** im Bereich der Kammer (14) die Tragrollen (23) innerhalb der Kammer (14) angebracht sind.

7. Bandförderanlage nach einem der Ansprüche 1 bis 6, **dadurch gekennzeichnet, dass** die Dichtmittel (21) Dichtleisten (25) umfassen, die auf Tragelementen (22) lösbar aufgesetzt sind.

8. Bandförderanlage nach Anspruch 7, **dadurch gekennzeichnet, dass** die Tragelemente (22) mit den aufgesetzten Dichtleisten (25) mit Anpressmitteln (29) ausgestattet sind, mittels welchen die Dichtleisten (25) an das Antriebsband (8) anpressbar sind.

9. Bandförderanlage nach Anspruch 8, **dadurch gekennzeichnet, dass** die Anpressmittel (29) aus Tragleisten (27) gebildet sind, welche als Stössel (28) wirken, welche über Stellmittel verstellbar sind.

10. Bandförderanlage nach Anspruch 9, **dadurch gekennzeichnet, dass** die Stellmittel über ein fluides Mittel verstellbar sind.

11. Bandförderanlage nach einem der Ansprüche 7 bis 10, **dadurch gekennzeichnet, dass** die Dichtleisten (25) aus einem abriebfesten, einen geringen Gleitreibungskoeffizienten aufweisenden Material gebildet sind.

12. Bandförderanlage nach einem der Ansprüche 1 bis 11, **dadurch gekennzeichnet, dass** die Absauganlage (15) mit einer regelbaren Absaugpumpe (16) ausgestattet ist.
